Europäisches Patentamt

European Patent Office

Office européen des brevets

(11) Publication number: **0 494 661 A1**

# EUROPEAN PATENT APPLICATION

(21) Application number: **92100215.0**

(22) Date of filing: **08.01.92**

(51) Int. Cl.5: **B32B 3/28**, B65D 81/14

(30) Priority: **10.01.91 US 639611**

(43) Date of publication of application:
**15.07.92 Bulletin 92/29**

(84) Designated Contracting States:
**AT BE CH DE DK ES FR GB IT LI MC NL PT SE**

(71) Applicant: **W.R. Grace & Co.-Conn.**
**1114 Avenue of the Americas**
**New York New York 10036(US)**

(72) Inventor: **Havens, Marvin Russell**
**206 Hackney Rd.**
**Greer, SC 29650(US)**

(74) Representative: **TER MEER - MÜLLER - STEINMEISTER & PARTNER**
**Mauerkircherstrasse 45**
**W-8000 München 80(DE)**

(54) Permanently antistatic air cushion laminate and pouch made therefrom.

(57) A permanently antistatic air cushion laminate having a forming web and a non-forming web, at least of one of said webs comprising a copolymer of (i) an alpha-olefin having the formula $RCH = CH_2$ wherein R is H or $C_1$ to $C_{20}$ alkyl, $C_1$ to $C_{20}$ alkoxy, or $C_6$ aryl, and (ii) an alpha,beta-ethylenically unsaturated carboxylic acid, said permanent antistatic characteristic being exhibited by the air cushion laminate showing a static decay time less than about 3000 milliseconds after equilibration for 24 hours at room temperature at a relative humidity less than about 15%, after abuse for 24 hours by a water wash.

The air cushion laminate may be made with the 8175 bubble machine manufactured by Cryovac. The laminate preferably has a web of ethylene acrylic acid copolymer, EAA, or ethylene methacrylic acid copolymer, EMAA containing quaternary amine antistatic agent.

EP 0 494 661 A1

This invention relates to the technical field of laminated films and related articles of manufacture, such as pouches and containers.

More specifically, the invention concerns permanently antistatic flexible polymeric air cushion films (air cushion film is colloquially referred to as "bubble cap" or "bubblepak"), which lend themselves specially well to the manufacture of containers and pouches.

The permanently antistatic flexible air cushion films and pouches made therefrom are for packaging and protecting static sensitive devices, i.e. electronic components such as circuit boards. The pouches provide excellent protection from the discharge of electrical voltage, not allowing it to couple to an electronic component inside the bag, as well as providing shock absorbing features for protection from jarring during shipment.

It is an object of this invention to provide a film which, additionally to desirable properties of resistance to wear, abrasion, and puncturing, and properties if desired such as a gas barrier, has permanent antistatic features characterized by an air cushion.

Another object of the invention, consequent to the former, is to provide pouches or containers intended in particular for packaging electronic components such as circuit boards.

According to a further aspect of the invention, there are provided containers or pouches for electronic packaging applications characterized by permanent antistatic properties as well as by properties of cushioning protection from shaking and jarring during shipment, resistance to wear, abrasion, and puncturing, and ,if desired, gas barrier, said pouches or containers being formed from a laminated film comprised of said air cushion.

Therefore, the present invention provides an electronics packaging pouch having permanent antistatic characteristics comprising a multi-ply air cushion laminate containing (a) a forming web ply of air cushion bubbles optionally including a barrier layer, said air cushion bubbles defining the pouch outside, and (b) a non-forming web ply optionally including a barrier layer, said non-forming web laminated on one surface thereof to the forming web.

The invention also provides a permanently antistatic air cushion laminate having a forming web and a non-forming web, at least of one of said webs comprising a copolymer of (i) an alpha-olefin having the formula $RCH = CH_2$ wherein R is H or $C_1$ to $C_{20}$ alkyl, $C_1$ to $C_{20}$ alkoxy, or $C_6$ aryl, and (ii) an alpha,beta-ethylenically unsaturated carboxylic acid, said permanent antistatic characteristic being exhibited by the air cushion laminate showing a static decay time less than about 3000 milliseconds after equilibration for 24 hours at room temperature at a relative humidity less than about 15%, after abuse for 24 hours by a water wash.

The invention also provides a method to make permanently antistatic air cushion laminate comprising laminating a forming web and non-forming web in an air cushion machine wherein at least on of said webs comprises a copolymer of (i) an alpha-olefin having the formula $RCH = CH_2$ wherein R is H or $C_1$ to $C_{20}$ alkyl, $C_1$ to $C_{20}$ alkoxy, or $C_6$ aryl, and (ii) an alpha,beta-ethylenically unsaturated carboxylic acid, said permanent antistatic characteristic being exhibited by the air cushion laminate showing a static decay time less than about 3000 milliseconds after equilibration for 24 hours at room temperature at a relative humidity less than about 15%, after abuse for 24 hours by a water wash.

The invention also provides a package comprising a static sensitive device enclosed in a permanently antistatic air cushion laminate pouch having a forming web and a non-forming web, at least of one of said webs comprising a copolymer of (i) an alpha-olefin having the formula $RCH = CH_2$ wherein R is H or $C_1$ to $C_{20}$ alkyl, $C_1$ to $C_{20}$ alkoxy, or $C_6$ aryl, and (ii) an alpha,beta-ethylenically unsaturated carboxylic acid, said permanent antistatic characteristic being exhibited by the air cushion laminate showing a static decay time less than about 3000 milliseconds after equilibration for 24 hours at room temperature at a relative humidity less than about 15%, after abuse for 24 hours by a water wash.

At least one web comprises a film of carboxylic acid copolymer and quaternary amine antistatic agent, said film being permanently antistatic. It has been surprisingly found that even though one web may optionally be polyolefinic film not containing any antistatic agent, the resultant air cushion laminate of forming web laminated to non-forming web is permanently antistatic.

The laminate air cushion film of the invention, which may be made into envelopes, pouches, and the like for the packaging of static sensitive devices comprises a non-forming web laminated to a forming web, one of which webs is a permanently antistatic film.

The film is fashioned to have cushioning characteristics by using bubble cap (also known as air cushioning) machinery, such as that described in US Patents 4,576,669 and 4,579,516, both to Caputo, or that described in US Patents 4,314,865 (February 9, 1982), 4,415,398 (November 15, 1983; divisional of 4,314,865), 4,427,474 (January 24, 1984; Terminal Disclaimer Requiring Expiration on Same Date as 4,314,865), and 4,412,879 (November 1, 1983), all by inventor Ottaviano, or that described in US Patents 3,416,984, 3,405,020, 3,586,565, and 3,785,899, all assigned to Sealed Air, the disclosures of which are incorporated herein by reference, to make a bubble cap laminate which provides cushioning and then the laminate is made into a bag or pouch by conventional methods.

Pouches for packaging electronic components where the pouches have cushioning material are discussed in U.S. Patents 4,496,406 and 4,471,872, both Dedow, assignor to General Dynamics, and U.K. Published Patent Application 2180792, Sims, assignor to Jiffy Packaging.

As discussed above, the air cushion film will have laminated together a bubble or blister ply (which may have one or more polymeric layers) called the forming web (below referred to as A) and another ply (which may have one or more polymeric layers) called the non-forming web (below referred to as B). When the air cushion film is made into a pouch, generally the non-forming web will be facing inside the pouch, and the forming web will be facing outside the pouch. Optionally, the forming web, non-forming web, or both may include a ply or a layer of a barrier film.

A simple example of a multilayer laminated air cushion film having such characteristics comprises multilayer laminated film of the A/B type, where A is a ply of the forming web of bubbles, and B is the non-forming web. In this case, the overall thickness of the multi-ply laminated film may be, for example, on the order of 65 to 170 microns, while the thicknesses of the ply A and ply B may be very preferably and approximately in the 12.5 to 32.5 microns range for the forming ply A, and approximately in the 40 to 80 microns range for the non-forming ply B.

Of course, the thicknesses of the plies A and B, and the arrangement and number of the plies may vary somewhat to meet individual requirements.

The bubbles are typically 1/4 inch to 1/8 inch in diameter and 1/4 inch to 1/8 inch high. But smaller or larger may be desirable in some instances.

Such a multilayer film, and particularly the multiply film of the A/B type described hereinabove, lends itself quite well to the manufacture of containers and pouches. Such containers and pouches are permanently antistatic, as well as resistant to jarring stresses, and the heat-welded film edges invariably meet the safety requirements imposed on them.

Suitable thicknesses for the antistatic web are from about 1 mil to 5 mils (25 microns to 125 microns), preferably about 2 to 4 mils (50 to 100 microns). The antistatic web is chosen from the permanent antistatic films of quaternary amine antistatic agent in a polymer containing carboxylic moieties, such as in ethylene acrylic acid copolymer (EAA) or in ethylene methacrylic acid copolymer (EMAA), as shown in U.S. Patent Application Serial No. 143,885 (Parent) and Serial No. 249,488 (Continuation-in-Part), both to Havens and Roberts, assignors to W.R. Grace & Co.-Conn., the disclosures of which are incorporated herein by reference. These two were combined for one foreign filing and their publicly available counterpart is European Patent Application Publication No. 0324494 published in European Patent Bulletin No. 1989/29, on July 19, 1989. Such EAAs are available under the tradename Primacor from duPont and such EMAAs are available under the tradename Nucrel, also from duPont. The metal salt neutralized version of these copolymers may also be employed, and such are available from duPont under the tradename Surlyn. The U.S. Applications and EP Publication No. 0324494 disclose a film, which film has permanent, non-bleeding antistatic characteristics. By "permanent, non-bleeding" antistatic characteristics is meant the film exhibits a static decay time (hereinafter abbreviated as SDT) under about 3000 milliseconds (hereinafter abbreviated as ms) when the static decay test using 5000 volts direct current (hereinafter abbreviated as Vdc) is performed as per Federal Test Method 101c, Method 4046.1, after a 24-hour water shower, i.e. the antistat property is not washed out by the shower. In the preferred embodiments, the film will also still have this SDT of about 3000 ms or less even after 12 days in a hot (approximately 70 to 71°C) oven. This antistatic film is preferably of 5 layers, each layer containing the quaternary amine antistatic agent, which film is commercially available as EPG-112 from the Cryovac Division of W.R. Grace & Co.-Conn. Optionally, an alternative version of EPG-112 having one or more antistat-free layers may be laminated to form one or both webs of the air cushion. For instance, this version may have an antistat-free surface, wherein EPG-112 has been made with a surface layer free of antistat, this surface layer being a polyolefin. Suitable polyolefins for the one or more antistat-free layers include, but are not limited to, low density polyethylene (LDPE), linear low density polyethylene (LLDPE), ethylene-vinyl acetate copolymer (EVA), high density polyethylene (HDPE), ethylene-propylene copolymer (EPC), and the like, or mixtures thereof.

As per U.S. Serial Nos. 143,885 and 249,488 and their counterparts EP Publication 0324494, the polymer containing carboxylic acid moieties and the quaternary amine are combined by mixing with heat. Optionally, a polymer compatible therewith, such as a polyolefin, may be blended in the mixture. Any suitable mixing means may be employed such as a blender or a twin screw extruder. The heat should be from about 50°C to 290°C, more preferably about 100°C to 250°C, even more preferably about 100°C to 200°C. Then the resultant may be formed into a film such as by heat pressing on a platen or by any well known extrusion methods. The film is permanently antistatic, which means it will dissipate an applied charge of +5000 Vdc in less than about 3000 ms, more preferably less than 2000 ms, using the static decay time (SDT) method described in Federal Test Method Standard 101c, Method 4046.1, even after a 24-hour water shower. This is unlike prior polymeric films containing an antistatic agent to give them antistatic characteristics, which characteristics can be washed out after a 24-hour water shower because the agents operate by migrating to the surface and attracting moisture. Furthermore, in some embodiments, the films survive 1 day, more preferably 3 days, even more preferably 5 days, and most preferably 12 days in a hot oven at approximately 70°C to 71°C and still exhibit this static decay time (SDT) of less than about 3000 ms, more preferably less than about 2000 ms.

Measuring the antistatic property of the antistatic polymeric film: The antistatic property is exhibited by the ability of a polymer containing an antistatic agent to promote static charge decay, i.e. to dissipate a static charge. The polymer alone will not dissipate a static charge, but the polymer containing the agent is able to dissipate 99% of an applied static charge of ±5000 volt potential in a short amount of time, i.e. less than 3 seconds, more preferably less than 2 seconds (2000 milliseconds). Milliseconds is abbreviated herein as ms. Federal Test Method Standard 101c, Method 4046.1, "Electrostatic Properties of Materials" states less than 2000 ms and thus it is preferred to have a material that complies with 101c. Decay meters for measuring the time for dissipation of the applied volts are commercially available, such as the 406c static decay meter supplied by Electrotech Systems, Inc. Unless otherwise indicated in the Examples below, the films, prior to testing, were equilibrated at less than about 15% relative humidity (RH), which is considered to be a "dry" atmosphere, at about room temperature (RT) for about 24 to 48 hours. Sometimes prior to equilibration, the films were abused by being subjected to a 24-hour water wash or subjected to 12 days in a hot 160°F (71°C) oven.

Measuring Resistivity: Some of the films were tested for surface resistivity and volume resistivity according to ASTM D257. It is noted that there is not necessarily a correlation between the surface or volume resistivity of a polymeric film and the ability of a polymeric film to decay or dissipate charges as per the SDT test. Thus, the term "antistatic" as used herein describes a material which can dissipate 99% of an applied static charge of ±5000 Vdc in a short amount of time, preferably a static decay time less than about 3 seconds, more preferably less than about 2 seconds (Federal Test Method Standard 101c, Method 4046.1, "Electrostatic Properties of Materials"). If the material also happens to have an antistatic resistivity, i.e. a surface resistivity of about $10^5$ to $10^{12}$ ohms/square as further described below, then that material will be described using the term "antistatic surface resistivity".

The Department of Defense and the Electronics Industry Associaton have standards on surface resistivity of a material in ohms/square as follows:

SURFACE RESISTIVITY RANGES (OHMS/SQUARE)

| Insulative | Antistatic or Static Dissipative | Conductive |
|---|---|---|
| > $10^{12}$ | $10^{12}$ to $10^5$ | < $10^5$ |

In the Examples, resistivity was measured at a "dry" relative humidity under about 15% RH. It is noted that some of the films as illustrated by USSNs 143,885 and 249,488 and their counterpart EP Pub. 0324494 have both a preferred static decay time of about 3000 milliseconds or less and a static dissipative (as opposed to insulative) surface resistivity of $10^{12}$ to $10^5$ ohms/square, even after a 24-hour water shower or after 12 days in a hot oven. Thus these films are permanently antistatic by the definition of static decay time and permanently antistatic by the definition of antistatic surface resistivity; neither the 24-hour water shower nor the 12-day hot oven takes out the "antistatic" characteristic.

Many non-barrier polymer resins are suitable for one or more layers of the web that optionally does not contain antistatic agent. In general, these polymers are the same polyolefinic materials useful for the antistat-free surface layer of the alternative version of EPG-1I2, as discussed above. These include, but are not limited to, materials such as polyethylene (PE), polypropylene (PP), ethylenevinyl acetate (EVA), linear low density polyethylene (LLDPE), high density polyethylene (HDPE), medium density polyethylene (MDPE), low density polyethylene (LDPE), very low density linear polyethylene (VLDPE), ethylene/alkyl-acrylate copolymer (EA1Acr), ethylene/propylene copolymer (EPC), and the like, the homopolymers, copolymers, terpolymers, etc thereof, and blends and modifications thereof.

Blends of EVA, EPC, EA1Acr, PP, LDPE, HDPE, VLDPE, and LLDPE may also be advantageously employed.

If it is desired to maintain the bubbles for a long time the air cushion film of the invention contains a barrier layer. The layer is a barrier to fluids such as gas. Otherwise in a few weeks the air will have seeped out of the bubbles. The barrier layer may be composed of a layer comprising vinylidene chloride copolymer, typically with a comonomer selected from acrylic ester, acrylic acid, and vinyl chloride (commonly known as saran), or composed of a layer comprising hydrolyzed ethylene-vinyl acetate copolymer (EVOH), preferably hydrolyzed to at least about 50%, most preferably to greater than about 99%, or composed of a layer comprising polyester, or composed of a layer comprising polyamide (commonly known as nylon). An excellent barrier could be the multilayer coextruded film in U.S. Patent 4,724,185 to Shah, the disclosure of which is incorporated herein by reference. This multilayer film has a core barrier ply that is a blend of polyamide and EVOH. The oxygen transmission rate of the barrier layer should be below 150, more preferably below 70 cc/sq. m/ mil thickness/24 hours/atm as measured by ASTM D-3985. If the air cushion laminate is going to be used for packaging and then discarded within a few weeks of manufacture of the air cushion, then it does not need a barrier layer as the bubbles will maintain dimensional stability for a few weeks.

A suitable multilayer film useful for the ply for the web that is optionally antistat-free is of the 8-layer structure: LLDPE/LLDPE/LLDPE/adhesive/nylon/adhesive/EVA, LDPE, or LLDPE/EVA. The last EVA layer is the sealing layer that is laminated to the other web. Suitable EVA resin is sold by Exxon under the trademark XR 32.89, and has 4% VA. It is desired to use LLDPE to provide a heat barrier during the thermal lamination to seal the forming web and non-forming web together when making air cushion as the LLDPE side is what touches the hot forming roller of the air cushion machine. Suitable LLDPE resin is sold by Dow Chemical under the trademarks Dowlex 2045.03 or Dowlex 2035. Suitable adhesive resins are sold by duPont under the trademark Bynel or sold by Quantum/USI under the trademark Plexar. A suitable nylon is nylon 6 sold under trademark Capron Nylon 6 by Allied. Each surface layer may contain up to 20% by weight of masterbatch antiblock, a suitable one being sold under the tradename EPE-8160 by Teknor. A suitable LDPE is sold under the tradename F-3445 by duPont.

The starting film used for the webs preparing the air cushion films of this invention may be prepared with conventional methods, effecting, for example, a compounding step in accordance with conventional industrial practice, e.g. by means of extruder.

The following Examples are intended to illustrate the invention and it is not intended to limit the invention thereby.

EXAMPLE I

Air Cushion Laminate of Polyolefinic Forming Web A To EPG-112 Non-Forming Web B

EPG-112 was a coextruded, hot blown, 5-layer symmetric film of the structure: 1/2/3/4/5, where the percentages recited below were in % by weight.

Layer 1: composed of EVA, EAA, antiblock, antistatic agent

EVA: 30% of Layer 1

| Density: | 0.929 to 0.931 g/ml |
|---|---|
| VA Content: | 9.0 ± 0.5% |
| Melt Index: | 1.8 to 2.2 g/10 min., ASTM D-1238 |

EAA: 52.5% of Layer 1

| Density: | 0.938 g/ml |
|---|---|
| Acrylic Acid Content: | 9.5% |
| Vicat Softening Point: | 180°F |
| Melt Index: | 1.5 ± 0.5 g/10 min., ASTM D-1238 |

Antiblock Masterbatch - Silica Dispersion in Polyethyelene: 10% of Layer 1

| | |
|---|---|
| Density of Antiblock Masterbatch: | 0.96 to 0.98 g/ml |
| Melting Point of Masterbatch: | Unknown |
| Silica Content: | 10% |
| Melt Index of Masterbatch: | 3.90 to 4.14 g/10 min., ASTM D-1238 |

Antistat: Modified Soya Dimethylethylammonium Ethosulfate: 7.5% of Layer 1

| | |
|---|---|
| Density of Antistat: | 1.005 g/ml @25°C |
| pH 35% Solution in Water: | 6.0 - 6.9 @25°C |
| Boiling Point: | >300°F |
| Melting Point: | 120°F |

Layer 2: Composed of EVA, EAA, and Antistatic Agent

EVA: 67% of layer 2

 Same EVA as layer 1

EAA: 24.7% of layer 2

 Same EAA as layer 1

Antistatic Agent: 8.3% of layer 2

 Same antistatic agent as layer 1

Layer 3: Composed of LLDPE, EAA, Antistatic Agent

LLDPE: 90% of layer 3

| | |
|---|---|
| Density: | 0.918 to 0.922 g/ml |
| Melting Point: | 123 - 126°C, DSC 2nd heat |
| Melt Index: | 1.1 ± 1g/10 min. |
| Octene Comonomer Content: | 6.5 ± 0.5% |

EAA: 7.5% of layer 3

 Same EAA as layer 1

Antistatic Agent: 2.5% of layer 3

 Same antistatic agent as layer 1

Layer 4: Same as Layer 2

Layer 5: Same as Layer 1

The polyolefin film for forming web A was a hot blown, coextruded 8-layer film of the structure:

| Layer | Material | Tradename |
|---|---|---|
| 1 | 80% EVA (4%VA),MI = 10<br>20% Antiblock Masterbatch | XR 32.89<br>Same as above |
| 2 | LDPE | F-3445 |
| 3 | Adhesive | Plexar 3 |
| 4 | Nylon | Capron 6 |
| 5 | Adhesive | Plexar 3 |
| 6 | LLDPE, density = 0.920, MI = 1.1 | Dowlex 2045.03 |
| 7 | LLDPE, density = 0.920, MI = 1.1 | Dowlex 2045.03 |
| 8 | LLDPE | Dowlex 2035 |

4 mil EPG-112 was then laminated to 1 mil polyolefin film as forming web A on its EVA side, using a Cryovac (R) 8175 air cushion machine. Pouches were made by heat-sealing together on three edges two sections of the laminate with the antistatic film side being the sealing layer of the pouch. Pouches were sufficiently transparent to afford visual identification of an electrical component inside the envelope or pouch.

Results of electrical measurements at room temperature on the laminate were as follows:

| Tests | "Bubble" Polyolefin Film Side | "Flat" Antistatic Film Side |
|---|---|---|
| surface resistivity ohms/sq | $2.4 \times 10^{11}$ | $1.2 \times 10^{13}$ |
| volume resistivity ohms-cm | OFF SCALE* | OFF SCALE |
| SDT    ms | 110 | 143 |
| **Repeat Tests After 24 Hour Water Wash** | | |
| surface resistivity ohms/sq | OFF SCALE | $3.9 \times 10^{12}$ |
| volume resistivity ohms-cm | NOT TESTED | NOT TESTED |
| SDT    ms | 148 | 141 |
| **Repeat Tests After 12-day Hot Oven** | | |
| surface resistivity ohms/sq | OFF SCALE | $1.7 \times 10^{11}$ |
| volume resistivity ohms-cm | NOT TESTED | NOT TESTED |
| SDT    ms | 163 | 176 |

*The maximum meter scale reads to $10^{16}$. Thus, off scale means a resistivity of at least $10^{16}$.

EXAMPLE II

The procedure of Example 1 was repeated, except this time both the forming web and the non-forming web were of EPG-112.

| Tests | "Bubble" Side | "Flat Side" |
|---|---|---|
| surface resistivity ohms/sq | $1.9 \times 10^{11}$ | $1.3 \times 10^{11}$ |
| volume resistivity ohms-cm | $4.7 \times 10^{10}$ | $2.0 \times 10^{11}$ |
| SDT   ms | 43 | 48 |
| **Repeat Tests After 24-hour Water Wash** | | |
| surface resistivity ohms/sq | OFF SCALE | $6.7 \times 10^{12}$ |
| volume resistivity ohms-cm | NOT TESTED | NOT TESTED |
| SDT   ms | 66 | 58 |
| **Repeat Tests After 12-day Hot Oven** | | |
| surface resistivity ohms/sq | $2.2 \times 10^{11}$ | $1.2 \times 10^{11}$ |
| volume resistivity ohms-cm | NOT TESTED | NOT TESTED |
| SDT   ms | 62 | 74 |

*The maximum meter scale reads to $10^{16}$.  Thus, off scale means a resistivity of at least $10^{16}$.

EXAMPLE III

The following additional permanently antistatic films were made wherein Layer 1 was like layer 1 EPG-112, but other layers were different to include a barrier polymer.

| FILM NUMBER | LAYER NUMBER | | | | |
|---|---|---|---|---|---|
| | 1 | 2 | 3 | 4 | 5 |
| EPX 290 (1) | EVA EAA ANTIBLOCK ANTISTAT | EVA EAA ANTISTAT | NYLON | SAME AS 2 | SAME AS 1 |
| EPX 291 (2) | EVA EAA ANTIBLOCK ANTISTAT | EVA EAA ANTISTAT | POLYESTER | SAME AS 2 | SAME AS 1 |
| EPX 292 (3) | EVA EAA ANTIBLOCK ANTISTAT | EVA EAA ANTISTAT | HULS 1801F NYLON | SAME AS 2 | SAME AS 1 |
| EPX 320 (4) | EVA EAA ANTIBLOCK ANTISTAT | ADHESIVE ANTISTAT | POLYESTER | SAME AS 2 | LLDPE ANTIBLOCK |
| EPX 321 (5) | EVA EAA ANTIBLOCK ANTISTAT | ADHESIVE ANTISTAT | POLYESTER | SAME AS 2 | LLDPE ANTIBLOCK |
| EPX 322 (6) | EVA EAA ANTIBLOCK ANTISTAT | ADHESIVE ANTISTAT | EVOH | SAME AS 2 | LLDPE ANTIBLOCK |
| EPX 323 (7) | EVA EAA ANTIBLOCK ANTISTAT | ADHESIVE ANTISTAT | EVOH | SAME AS 2 | LLDPE ANTIBLOCK |
| EPX 324 (8) | EVA EAA ANTIBLOCK ANTISTAT | ADHESIVE ANTISTAT | EVOH | SAME AS 2 | EVA |
| EPX 325 (9) | EVA EAA ANTIBLOCK ANTISTAT | ADHESIVE ANTISTAT | EVOH | SAME AS 2 | EVA |

| EPX 348 (10) | EVA EAA ANTIBLOCK ANTISTAT | ADHESIVE ANTISTAT | EVOH | SAME AS 2 | LLDPE EAA ANTISTAT ANTIBLOCK |
|---|---|---|---|---|---|
| EPX 349 (11) | EVA EAA ANTIBLOCK ANTISTAT | ADHESIVE ANTISTAT | EVOH | SAME AS 2 | LLDPE ANTIBLOCK |
| EPX 350 (12) | EVA EAA ANTIBLOCK ANTISTAT | ADHESIVE ANTISTAT | EVOH | SAME AS 2 | LLDPE EAA ANTISTAT ANTIBLOCK |
| EPX 351 (13) | EVA EAA ANTIBLOCK ANTISTAT | ADHESIVE ANTISTAT | EVOH | SAME AS 2 | LLDPE EAA ANTISTAT ANTIBLOCK |
| EPX 352 (14) | EVA EAA ANTIBLOCK ANTISTAT | ADHESIVE ANTISTAT | EVOH | SAME AS 2 | LLDPE ANTIBLOCK |
| EPX 353 (15) | EVA EAA ANTIBLOCK ANTISTAT | ADHESIVE ANTISTAT | EVOH | SAME AS 2 | LLDPE EAA ANTISTAT ANTIBLOCK |
| EPX 354 (16) | EVA EAA ANTIBLOCK ANTISTAT | ADHESIVE ANTISTAT | EVOH | SAME AS 2 | LLDPE ANTIBLOCK |
| EPX 355 (17) | EVA EAA ANTIBLOCK ANTISTAT | ADHESIVE ANTISTAT | EVOH | SAME AS 2 | LLDPE ANTIBLOCK |
| EPX 364 (18) | EVA EAA ANTIBLOCK ANTISTAT | ADHESIVE ANTISTAT | EVOH | SAME AS 2 | SAME AS 1 |

EXAMPLE IV

Two sheets each for each of the 18 films of Example III are run through the Cryovac (R) 8175 air cushion machine to make 18 samples of air cushion laminate. Thus one sheet of the film is the forming web and one sheet of the sample film is the non-forming web. The lamination of the webs is with Layer 1 of each web in face-to-face sealing relationship. These air cushion laminates should exhibit excellent permanent antistatic properties with a static decay time under 3000 milliseconds after equilation after abuse by a 24-hour water wash.

While certain representative embodiments and details have been shown for the purpose of illustration, numerous modifications to the formulations described above can be made without departing from the invention disclosed.

**Claims**

1. A permanently antistatic air cushion laminate having a forming web and a non-forming web, at least of one of said webs comprising a copolymer of (i) an alpha-olefin having the formula $RCH=CH_2$ wherein R is H or $C_1$ to $C_{20}$ alkyl, $C_1$ to $C_{20}$ alkoxy, or $C_6$ aryl, and (ii) an alpha,beta-ethylenically unsaturated carboxylic acid, said permanent antistatic characteristic being exhibited by the air cushion laminate showing a static decay time less than about 3000 milliseconds after equilibration for 24 hours at room temperature at a relative humidity less than about 15%, after abuse for 24 hours by a water wash.

2. The air cushion laminate of claim 1 wherein both the non-forming web and the forming web comprise said copolymer.

3. The air cushion laminate of claim 1 wherein one or both webs include a barrier layer.

4. A method to make permanently antistatic air cushion laminate comprising laminating a forming web and non-forming web in an air cushion machine wherein at least one of said webs comprises a copolymer of (i) an alpha-olefin having the formula $RCH=CH_2$ wherein R is H or $C_1$ to $C_{20}$ alkyl, $C_1$ to $C_{20}$ alkoxy, or $C_6$ aryl, and (ii) an alpha,beta-ethylenically unsaturated carboxylic acid, said permanent antistatic characteristic being exhibited by the air cushion laminate showing a static decay time less than about 3000 milliseconds after equilibration for 24 hours at room temperature at a relative humidity less than about 15%, after abuse for 24 hours by a water wash.

5. The method of claim 4 wherein both the non-forming web and the forming web comprise said copolymer.

6. The method of claim 4 wherein one or both webs include a barrier layer.

7. A package comprising a static sensitive device enclosed in a permanently antistatic air cushion laminate pouch having a forming web and a non-forming web, at least of one of said webs comprising a copolymer of (i) an alpha-olefin having the formula $RCH=CH_2$ wherein R is H or $C_1$ to $C_{20}$ alkyl, $C_1$ to $C_{20}$ alkoxy, or $C_6$ aryl, and (ii) an alpha,beta-ethylenically unsaturated carboxylic acid, said permanent antistatic characteristic being exhibited by the air cushion laminate showing a static decay time less than about 3000 milliseconds after equilibration for 24 hours at room temperature at at relative humidity less than about 15%, after abuse for 24 hours by a water wash.

8. The package of claim 7 wherein both the non-forming web and the forming web comprise said copolymer.

9. The package of claim 7 wherein one or both webs include a barrier layer.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 254 531 (JAPAN STYRENE PAPER CORP.) <br> * page 2, line 14 - page 3, line 10; figure 2 * <br> --- | 1-9 | B32B3/28 <br> B65D81/14 |
| A | EP-A-0 264 270 (W.R. GRACE & CO.) <br> *EXAMPLES* <br> * page 3, line 43 - page 4, line 4 * <br> --- | 1,4 | |
| A | WO-A-8 900 919 (G. CAPUTO) <br> * page 5, line 17 - line 29 * <br> --- | 1,4 | |
| A | US-A-4 228 215 (C. HEIN) <br> * claims 1,8 * <br> --- | 1,4 | |
| A | EP-A-0 205 758 (INDUSTRIA PLASTICA MONREGALESE) <br> ----- | | |

|  | TECHNICAL FIELDS SEARCHED (Int. Cl.5 ) |
|---|---|
| | B32B <br> B65D |

The present search report has been drawn up for all claims

| Place of search | Date of completion of the search | Examiner |
|---|---|---|
| THE HAGUE | 08 APRIL 1992 | MCCONNELL C.H. |